Europäisches Patentamt

European Patent Office

Office européen des brevets

(11) Veröffentlichungsnummer: **0 410 262 A2**

## (12) EUROPÄISCHE PATENTANMELDUNG

(21) Anmeldenummer: **90113600.2**

(22) Anmeldetag: **16.07.90**

(51) Int. Cl.5: **C08L 23/08**, C09G 1/16,
C09D 123/08, D06M 15/263

(30) Priorität: **24.07.89 DE 3924396**

(43) Veröffentlichungstag der Anmeldung:
**30.01.91 Patentblatt 91/05**

(84) Benannte Vertragsstaaten:
**BE DE ES FR IT NL**

(71) Anmelder: **BASF Aktiengesellschaft
Carl-Bosch-Strasse 38
D-6700 Ludwigshafen(DE)**

(72) Erfinder: **Schmidt-Thuemmes, Juergen, Dr.
Mainstrasse 7
D-6708 Neuhofen(DE)**
Erfinder: **Koehler, Gernot, Dr.
Wissfeldstrasse 5b
D-5309 Meckenheim(DE)**

(54) **Herstellung von Wachsdispersionen mit angehobenem Feststoffgehalt.**

(57) Die Erfindung betrifft wäßrige, bei Raumtemperatur fließfähige Dispersionen von Ethylencopolymerwachsen, enthaltend eine Mischung aus einem Ethylencopolymerwachs mit hoher Säurezahl und einem Ethylencopolymerwachs mit niedriger Säurezahl.

Die erfindungsgemäßen Mischungen eignen sich insbesondere als Oberflächenkonservierungsmittel, als Zumischkomponenten in Fußbodenpflegemitteln oder als Schlichtemittel in der Textilveredlung.

EP 0 410 262 A2

## HERSTELLUNG VON WACHSDISPERSIONEN MIT ANGEHOBENEM FESTSTOFFGEHALT

Wäßrige Dispersionen von carboxylgruppenhaltigen Wachsen eignen sich für eine Fülle von Anwendungen, z.B. als Konservierungsmittel für Metall- und Lackoberflächen, als Zumischkomponenten in Fußbodenpflegemitteln oder als Schlichtemittel in der Textilverarbeitung.

Die DE-OS 35 12 564 beschreibt ein flüssiges Konservierungsmittel für Metall- und Lackoberflächen in Form einer wäßrigen Dispersion eines Ethylen-Acrylsäure-Copolymerisatwachses, bestehend aus 8 bis 25 Gew.% Acrylsäure und 92 bis 75 Gew.% Ethylen, wobei die Carboxylgruppen zu 50 bis 100 mol-% neutralisiert sind. Die Dispersionen sind ohne Zusatz von Emulgator herstellbar und enthalten 10 bis 30 Gew.% des Ethylen-Acrylsäure-Copolymerisatwachses.

Die DE-OS 34 20 168 beschreibt Fußbodenpflege-Emulsionen aus einer sekundären Dispersion eines carboxylgruppenhaltigen Ethylencopolymerisatwachses, bestehend aus 10 bis 25 Gew.% einer α-olefinisch ungesättigten Mono- oder Dicarbonsäure mit 3 bis 8 C-Atomen, und einer wäßrigen Primärdispersion. Die sekundäre Wachsdispersion enthält zwischen 15 und 27 % des neutralisierten, carboxylgruppenhaltigen Ethylencopolymerisatwachses.

Beide beschriebenen Systeme haben den Nachteil, daß die Dispersionen einen vergleichsweise niedrigen Feststoffgehalt aufweisen, nämlich maximal 27 % bzw. 30 %. Bei dem Versuch, höherkonzentrierte Dispersionen herzustellen, erhält man hochviskose, nicht fließfähige Pasten, die in der Praxis nicht verarbeitbar sind.

Aufgabe der Erfindung war es, wäßrige Dispersionen von Ethylen-Copolymerwachsen zu entwickeln, die einen Feststoffgehalt von mindestens 45 % und eine für anwendungstechnische Zwecke noch ausreichende Fließfähigkeit aufweisen, d.h. dynamische Viskositäten bei Raumtemperatur von nicht mehr als 5000 mPa•s haben.

Es wurde nun gefunden, daß die Aufgabe gelöst wird, wenn man Mischungen von Ethylencopolymerwachsen mit hoher Säurezahl mit Ethylencopolymerwachsen mit niedriger Säurezahl herstellt.

Die erfindungsgemäßen Mischungen haben in der Regel Feststoffgehalte zwischen 45 und 55 % und die Komponenten Säurezahlen von ungefähr 160 bis 240 bzw. 40 und 120.

In einer bevorzugten Ausführungsform der Erfindung stellt das dispergierte Wachs eine Mischung aus 20 bis 30 Gew.-Teilen eines Ethylencopolymerwachses mit hoher Säurezahl und 70 bis 80 Gew.-Teilen eines Ethylencopolymerwachses mit niedriger Säurezahl dar.

Die Herstellung der Ethylencopolymerisatwachse erfolgt in an sich bekannter Weise durch kontinuierliche Copolymerisation von Ethylen mit den ungesättigten Carbonsäuren sowie gegebenenfalls weiteren ungesättigten, copolymerisierbaren Verbindungen in Gegenwart von radikalbildenden Initiatoren. Die Polymerisation findet bei Temperaturen von 150 bis 300 °C und Drucken von 1.000 bis 3.000 bar statt. Die Polymerisation erfolgt in einphasigem Polymerisationsmedium mit Ethylenumsätzen von maximal 25 %, wobei das im überkritischen Zustand vorliegende Ethylen als Lösungsmittel für das Reaktionsgemisch und die Polymerschmelze dient. Die Dosierung der ethylenisch ungesättigten Säuren und des verwendeten radikalischen Polymerisationsstarters in das Reaktionsgemisch erfolgt getrennt. Die Dosierung der für die Einstellung des Molekulargewichts erforderlichen Regler kann zusammen mit den Comonomeren bzw. dem radikalischen Starter erfolgen.

Bei den copolymerisierten ungesättigten Carbonsäuren handelt es sich um olefinisch ungesättigte Mono- oder Dicarbonsäuren mit 3 bis 8 C-Atomen, von denen beispielsweise Acrylsäure, Methacrylsäure, Crotonsäure, Maleinsäure, Fumarsäure und Itaconsäure genannt seien. Davon sind Acrylsäure oder Methacrylsäure und ihre Mischungen besonders bevorzugt.

Von den weiteren copolymerisierbaren Monomeren seien beispielsweise genannt Ester der Acrylsäure oder Methacrylsäure mit einem gesättigten einwertigen aliphatischen Alkohol, insbesondere mit einem Alkohol mit 1 bis 4 C-Atomen, wie Methanol, Ethanol, n- und Isopropanol, n-Butanol, isobutanol, sek.-Butanol und tert.-Butanol.

Diese oder andere, dem Fachmann wohlbekannte, mit Ethylen copolymerisierbare Monomere werden üblicherweise in Mengen zwischen 0 und 10 Gew.%, bezogen auf die Gesamtmenge an Monomeren, verwendet.

Die Polymerisation findet im einphasigen Polymerisationsmilieu statt, wobei das im überkritischen zustand vorliegende Ethylen als Lösungsmittel für das Reaktionsgemisch und die Polymerschmelze dient.

Durch Einsatz von Molekulargewichtsreglern wird die Molmasse der entstehenden Ethylencopolymerwachse so geregelt, daß das Ethylencopolymerwachs in der Säureform eine Schmelzviskosität von wenigstens 1000 mm²/s, gemessen bei 120 °C als untere Grenze der Molmasse, und einen MFI-Wert von wenigstens 1, gemessen bei 125 °C und 325 g, als obere Grenze der Molmasse aufweist.

Als Regler setzt man allgemein übliche Substanzen, die diese Funktion ausüben, ein. Hierzu gehören z.B. aliphatische Aldehyde mit 3 bis 6 C-Atomen, wie Propionaldehyd oder n-Butyraldehyd, aliphatische Ketone mit 3 bis 6 C-Atomen, wie Aceton oder Methylethylketon, $\alpha$-Olefine mit 3 bis 6 C-Atomen, wie Propen, 1-Buten oder 1-Penten, oder $C_3$- bis $C_5$-Alkane, wie Propan, n-Butan oder n-Pentan. Bevorzugt werden aliphatische Aldehyde, wie Propionaldehyd oder n-Butyraldehyd eingesetzt.

Die Herstellung der erfindungsgemäßen Mischungen (Wachsdispersionen) erfolgt in an sich üblicher Weise in einem Emulgier-Autoklaven. Erforderlich ist eine Temperatur von ungefähr 150° C und ca. 5 bar Druck. Meist wird nach dem sogenannten Eintopfverfahren gearbeitet. Dabei werden alle Komponenten in den Autoklaven gegeben und im geschlossenen System bei mäßig schnell laufendem Rührer auf Druck und Temperatur gebracht.

Durch Zugabe eines Neutralisationsmittels werden die Carboxylgruppen der Wachse teilweise oder vollständig neutralisiert. Als Neutralisationsmittel kommen in Betracht Alkalihydroxide, insbesondere Natrium- oder Kaliumhydroxid, Ammoniak oder ein aliphatisches, gegebenenfalls durch eine oder mehrere Hydroxylgruppen substituiertes Alkylamin. Als Alkylamine kommen insbesondere in Betracht Mono-, Di- oder Trialkanolamine mit bevorzugt 2 bis 6 C-Atomen im Hydroxyalkylrest, Monoalkyl-dialkanolamine und Dialkanol-monoalkylamine mit jeweils 2 bis 8 C-Atomen im Alkyl- und Hydroxyalkylrest. Selbstverständlich können auch Mischungen der genannten Basen verwendet werden. Von den substituierten Aminen seien im einzelnen beispielsweise genannt Diethanolamin, Triethanolamin, Triisopropylamin, 2-Amino-2-methylpropanol, Dimethylethanolamin und Diethylethanolamin.

Üblicherweise wird die Menge an Neutralisationsmittel so gewählt, daß die Carboxylgruppen der dispergierten Ethylencopolymerwachse zu 65 bis 100 mol-% neutralisiert sind.

In der Regel haben die erfindungsgemäßen Wachsdispersionen eine für die überwiegende Zahl der Anwendungen ausreichende Stabilität, so daß auf Zusätze von Emulgatoren verzichtet werden kann. Sollten in Einzelfällen besonders hohe Ansprüche an die (Scher)Stabilität der Dispersionen gestellt werden, so kann diese durch Zusatz nichtionischer oder anionischer Emulgatoren angehoben werden. Hierfür kommen an sich übliche Emulgatoren, insbesondere Oxoalkoholethoxylate, Ethoxylate geradkettiger oder verzweigter Fettalkohole oder Alkylphenolethoxylate in Betracht.

Wegen der unvermeidbaren negativen Auswirkungen dieser Verbindungen auf die aus den erfindungsgemäßen Wachsdispersionen herstellbaren Filme (höhere Wasserempfindlichkeit, verringerte Transparenz) werden Emulgatoren nur in Einzelfällen und wenn unbedingt notwendig, verwendet. Es ist einer der Vorteile der erfindungsgemäßen Mischungen, daß sie trotz ihres hohen Feststoffgehaltes auch eine für die meisten Anwendungen voll ausreichende Stabilität aufweisen.

Herstellung von Ethylencopolymerwachsen

Wachs 1

Eine Mischung von 293 kg/h Ethylen, 8,3 kg/h Acrylsäure und 1,62 kg/h Propionaldehyd mit einer Temperatur von 91° C wird kontinuierlich durch einen auf einem Druck von 2300 bar gehaltenen 10 l Rührautoklaven geleitet. Durch die kontinuierliche Zugabe von 197,6 g/h t-Butylperpivalat in Isododecan als Lösemittel wird die Temperatur im Autoklavenreaktor bei 219° C gehalten. Das nach der Entspannung des Reaktorgemisches in einer Menge von 39 kg/h anfallende Polymerisat entspricht einem Umsatz von 13,3 %, bezogen auf den Ethylendurchsatz. Es enthält 19,0 Gew.% Acrylsäure (Säurezahl 148) und hat einen MFI (125° C/0,325 kg) von 40 g/10 min.

Die Wachse 2-5 wurden analog Wachs 1 bei Konstanthaltung des Ethylendurchsatzes durch Variation der Mengen an Acrylsäure, Propionaldehyd und Initiator hergestellt:

| Wachs | As (kg/h) | PA (kg/h) | J (g/h) |
|-------|-----------|-----------|---------|
| 2 | 14,3 | 1,45 | 305,3 |
| 3 | 6,0 | 1,55 | 150,7 |
| 4 | 11,6 | 1,79 | 170,2 |
| 5 | 4,4 | 0,95 | 105,9 |

3

Die charakteristischen Werte dieser Wachse wurden in Tabelle 1 zusammengestellt:

Tabelle 1

| Ethylenecopolymerwachse | | | |
|---|---|---|---|
| | MFI (126° C/0,325 kg) g/10 min | AS-Gehalt % | Säurezahl mg KOH/g Substanz |
| Wachs 1 | 40 | 19,0 | 148 |
| Wachs 2 | 15 | 29,7 | 231 |
| Wachs 3 | 52 | 14,6 | 114 |
| Wachs 4 | 35 | 25,2 | 196 |
| Wachs 5 | 11 | 11,5 | 89 |

Herstellung von Wachsdispersionen

Beispiel 1 (erfindungsgemäß)

In einem Rührkessel werden bei einem Überdruck von 4 bis 6 bar und einer Temperatur von 140 bis 160° C 45 Tl. Wachs 2, 105 Tl. Wachs 3, 24 Tl. wäßrige Ammoniaklösung (25 %ig) und 138 Tl. Wasser unter Rühren erhitzt, bis nach ca. einer Stunde eine gleichmäßige Emulsion entstanden ist. Nach dem Abkühlen liegt eine viskose, aber noch gut fließfähige Dispersion vor, die einen Feststoffgehalt von 50 %, einen pH-Wert von 9 und eine dynamische Viskosität von 1500 mPa*s aufweist.

Beispiel 2 (erfindungsgemäß)

In einem Rührautoklaven werden bei einem Überdruck von 4 bis 6 bar und einer Temperatur von 140 bis 160° C 34,5 Tl. Wachs 4 und 115,5 Tl. Wachs 5, 19 Tl. wäßrige Ammoniaklösung (25 %ig) und 175 Tl. Wasser unter Rühren erhitzt, bis nach ca. einer Stunde eine gleichmäßige Emulsion entstanden ist. Nach dem Abkühlen liegt eine viskose, aber noch gut fließfähige Dispersion vor, die einen Feststoffgehalt von 45 %, einen pH-Wert von 9 und eine dynamische Viskosität von 1200 mPa*s aufweist.

Beispiel 3 (nicht erfindungsgemäß)

In einem Rührkessel werden bei einem Überdruck von 4 bis 6 bar und einer Temperatur von 140 bis 160° C 50 Tl. Wachs 1, 24 Tl. wäßrige Ammoniaklösung (25 %ig) und 138 Tl. Wasser unter Rühren erhitzt, bis nach ca. drei Stunden eine gleichmäßige, aber hochviskose Emulsion entstanden ist. Nach dem Abkühlen ist die Dispersion zu einer gallertartigen Masse erstarrt, deren Viskosität und pH-Wert nicht meßbar sind. Sie weist einen Feststoffgehalt von 50 % auf.

Beispiel 4 (nicht erfindungsgemäß)

In einem Rührkessel werden bei einem Überdruck von 4 bis 6 bar und einer Temperatur von 140 bis 160° C 150 Tl. Wachs 3, 3,19 Tl. wäßrige Ammoniaklösung (25 %ig) und 175 Tl. Wasser unter Rühren erhitzt, bis nach ca. drei Stunden eine gleichmäßige, aber hochviskose Emulsion entstanden ist. Nach dem Abkühlen ist die Dispersion zu einer gallertartigen Masse erstarrt, deren Viskosität und pH-Wert nicht meßbar sind. Sie weist einen Feststoffgehalt von 45 % auf.

**Ansprüche**

1. Wäßrige, bei Raumtemperatur fließfähige Dispersionen von Ethylencopolymerwachsen, enthaltend eine Mischung aus einem Ethylencopolymerwachs mit hoher Säurezahl und einem Ethylencopolymerwachs mit niedriger Säurezahl.

2. Wäßrige Dispersionen von Ethylencopolymerwachsen gemäß Anspruch 1 mit einem Feststoffgehalt von mindestens 45 %.

3. Wäßrige Dispersionen von Ethylencopolymerwachsen gemäß Anspruch 1 enthaltend eine Mischung aus einem Ethylencopolymerwachs mit einer Säurezahl zwischen 160 und 240 und einem Ethylencopolymerwachs mit einer Säurezahl zwischen 40 und 120.

4. Wäßrige Dispersionen von Ethylencopolymerwachsen gemäß Anspruch 1 enthaltend eine Mischung aus 20 bis 30 Gew.-Teilen eines Ethylencopolymerwachses mit hoher Säurezahl und 70 bis 80 Gew.-Teilen eines Ethylencopolymerwachses mit niedriger Säurezahl.

5. Verwendung der Mischungen gemäß Anspruch 1 als Oberflächenkonservierungsmittel, Zusätze zu Fußbodenpflegemitteln oder als Schlichtemittel bei der Textilveredlung.